# EUROPÄISCHE PATENTSCHRIFT

(11) **EP 2 749 397 B1**
(45) Veröffentlichungstag und Bekanntmachung des Hinweises auf die Patenterteilung: **14.10.2015**
(21) Anmeldenummer: 13005209.5
(22) Anmeldetag: 05.11.2013
(51) Int. Cl.: B29C 49/06, B29C 49/64

(54) **Verfahren und Vorrichtung zur Blasformung von Behältern**
Method and device for blow moulding containers
Procédé et dispositif destinés au formage par soufflage de récipients

(30) Priorität: 28.12.2012 DE 102012025207
(43) Veröffentlichungstag der Anmeldung: 02.07.2014
(73) Patentinhaber: KHS Corpoplast GmbH, 22145 Hamburg (DE)
(72) Erfinder: Baumgarte, Rolf, 22926 Ahrensburg (DE); Litzenberg, Michael, 21502 Geesthacht (DE); Lewin, Frank, 22889 Tangstedt (DE); Linke, Michael, 22159 Hamburg (DE); Lopez Belinchon, Amos, 22041 Hamburg (DE)
(74) Vertreter: Hausfeld, Norbert

(56) Entgegenhaltungen:
- EP-A1- 2 216 161
- DE-A1- 2 427 611
- DE-A1-102009 057 021
- DE-U1-202004 010 454
- US-A- 4 147 487

## Beschreibung

Die Erfindung betrifft eine Vorrichtung zur Blasformung von Behältern aus einem thermoplastischen Material, die mindestens eine entlang eines Transportweges eines Vorformlings angeordnete Heizstrecke mit wenigstens einer Heizeinrichtung, eine Handhabungseinrichtung für den Vorformling zum Transport durch die Heizstrecke und eine mit einer Blasform versehene Blasstation aufweist, wobei der Transportweg durch die Heizstrecke mindestens bereichsweise tunnelartig begrenzt ist, wobei auf wenigstens einer der Heizeinrichtung gegenüberliegenden Seite ein Reflektor vorgesehen ist, der im Bereich der Heizeinrichtung mit dieser zusammen einen Heizbereich bildet.

Die Erfindung betrifft darüber hinaus ein Verfahren zur Blasformung von Behältern, bei dem ein Vorformling aus einem thermoplastischen Material nach einer thermischen Konditionierung entlang eines Transportweges im Bereich einer Heizstrecke mit einem Heizbereich innerhalb einer Blasform durch Blasdruckeinwirkung in den Behälter umgeformt wird, und bei dem der Transportweg mindestens bereichsweise tunnelartig begrenzt wird.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorforming durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfasst auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Weitere gattungsgemäß Vorrichtungen und Verfahren sind in den Dokumenten US 4,147,487 A und DE 24 27 611 A1 beschrieben.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Handhabungseinrichtungen gehandhabt werden. Die Verwendung von Greifzangen zur Handhabung von Vorformlingen und die Verwendung von Spreizdornen, die zur Halterung in einem Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Vor einer Durchfiihrung der Beheizung werden die Vorformlinge typischerweise auf Transportdorne aufgesteckt, die den Vorformling entweder durch die gesamte Blasmaschine transportieren oder die lediglich im Bereich der Heizeinrichtung umlaufen. Bei einer stehenden Beheizung der Vorformlinge derart, dass die Mündungen der Vorformlinge in lotrechter Richtung nach unten orientiert sind, werden die Vorformlinge üblicherweise auf ein hülsenförmiges Halterungselement des Transportdornes aufgesteckt. Bei einer hängenden Beheizung der Vorformlinge, bei der diese mit ihren Mündungen in lotrechter Richtung nach oben orientiert sind, werden in der Regel Spreizdorne in die Mündungen der Vorformlinge eingeführt, die die Vorformlinge festklemmen.

Zur Verkürzung der erforderlichen Heizzeit ist es bekannt, im Bereich der Heizstrecke NIR-Strahler zu verwenden, deren Heizstrahlung in einem nahen Infrarotbereich emittiert wird, typischerweise mit Wellenlängen zwischen 0,4 und 1 Mikrometer. Die Aufheizung der Vorformlinge erfolgt dabei primär durch Strahlungsabsorption beim Durchgang der NIR-Strahlung durch das Vorformlingsmaterial. Zur Optimierung der Energieausbeute werden derartige Heizstrecken mit einer Vielzahl von Spiegelflächen ausgestattet, um eine Absorption der Wärmestrahlung durch Bauteile der Heizstrecke möglichst zu vermeiden oder zumindest stark zu reduzieren, und um die NIR-Strahlung erneut zum Heizen auf den Vorformling zu reflektieren.

Typischerweise werden die Heizstrecken zumindest bereichsweise tunnelartig ausgebildet, und sie sind dazu z.B. auf der einen Seite vom Gehäuse einer Halterung für die Heizelemente sowie auf der gegenüberliegenden Seite von einem diesem Gehäuse gegenüberliegenden Reflektor begrenzt. In vertikaler Richtung kann eine Begrenzung durch einen Boden und/oder einen Deckel erfolgen, je nachdem, ob die Vorformlinge mit ihren Mündungen in lotrechter Richtung nach oben oder nach unten orientiert durch die Heizstrecke hindurch transportiert werden. Auch diese vertikalen Begrenzungen können als Reflektoren ausgebildet werden. Es ist zudem üblich, den Mündungsbereich des Vorformlings z.B. mittels mitlaufender Reflektoren gegen erwärmende Strahlung zu schützen, da dieser Bereich bereits fertig ausgeprägt hergestellt ist und bei der Blasformung keine weitere Verformung erfahren soll.

Innerhalb des Heiztunnels befindet sich Luft, die durch die Heizeinrichtung und die sich ebenfalls aufheizenden Tunnelwände sowie den Vorformling erhitzt wird und durch die die Vorformlinge während ihrer Beheizung hindurch transportiert werden. Die Innenraumdimensionierung des Heiztunnels ist häufig unabhängig von der Dimensionierung der Vorformlinge, so dass bei relativ kleinen Vorformlingen ein relativ großes Innenvolumen der tunnelartig umschlossenen Heizstrecke sowie entsprechend relativ große, diesem Innenraum zugewandte Begrenzungsflächen des Heiztunnels vorliegen.

Zur Reduzierung der benötigten Heizenergie ist aus der WO 2011/063784 A1 bekannt, dass die quer zur Transportrichtung angeordnete Querschnittfläche der Heizstrecke in Abhängigkeit von einer Dimensionierung der zu beheizenden Vorformlinge derart verändert wird, dass kleineren Vorformlingen eine kleinere Querschnittfläche als größeren Vorformlingen zugeordnet wird. Dieses wird dadurch erreicht, dass eine quer zur Transportrichtung angeordnete Querschnittfläche der Heizstrecke von mindestens einer positionsveränderlich angeordneten Wandung derart begrenzt ist, dass durch eine Veränderung der Positionierung der Wandung die Größe der Querschnittfläche veränderbar ist. Diese Wandung kann z.B. ein in der Höhe positionierbarer Boden sein.

Aufgabe der vorliegenden Erfindung ist es, eine Vorrichtung der einleitend genannten Art derart zu konstruieren, dass die für die Temperierung der Vorformlinge aufzuwendende Heizenergie vermindert wird. Weiterhin ist es Aufgabe der vorliegenden Erfindung, ein Verfahren der einleitend genannten Art derart zu verbessern, dass die für die Temperierung der Vorformlinge aufzuwendende Heizenergie vermindert wird.

Diese Aufgabe wird hinsichtlich der Vorrichtung erfindungsgemäß dadurch gelöst, dass der Reflektor durch die Heizstrecke hindurch mit der Handhabungseinrichtung bewegbar ausgeführt ist und sich wenigstens teilweise in die Bewegungsbahn des Vorformlings hinein erstreckt.

Diese Aufgabe wird erfindungsgemäß hinsichtlich des Verfahrens dadurch gelöst, dass im Bereich der Heizstrecke ein Reflektor vorgesehen wird, der sich mit dem Vorformling durch die Heizstrecke bewegt, sich wenigstens abschnittweise dabei in die Bewegungsbahn des Vorformlings hinein erstreckt und den Heizbereich in horizontaler Richtung begrenzt. Dieses hineinerstrecken in die Bewegungsbahn ist aufgrund der Mitbewegung möglich, andernfalls würde der Vorformling mit dem Reflektor kollidieren.

Erfindungsgemäß wird somit die Größe des Heizbereichs der tunnelartigen Heizstrecke und somit das Innenvolumen der Heizstrecke verringert, bevorzugt in Abhängigkeit der Dimensionierung des Vorformlings, indem der mitlaufende Reflektor z.B. austauschbar ist. Der Reflektor sollte bevorzugt den Vorformling in einem Teilumfangsbereich umgeben. Erfindungsgemäß wurde erkannt, dass für die Beheizung des im Heiztunnel befindlichen Luftvolumens eine vom Volumen abhängige Energiemenge erforderlich ist, und dass durch die Transportbewegung der Vorformlinge durch die Heizstrecke hindurch und an den die Vorformlinge halternden Transportelementen vorbei ein ständiger Gasaustausch mit der Umgebung stattfindet, der zu einer permanenten Zuführung von kühler Umgebungsluft führt. Durch die erfindungsgemäße Ausgestaltung kann der mitlaufende Reflektor den Vorformling in einem Teilumfangsbereich enger umschließen als dies bei stehenden Reflektoren möglich ist. Dadurch ist eine Verkleinerung des Heizbereichsvolumens möglich sowie eine Verringerung der Größe der inneren Begrenzungsfläche des Heiztunnels, so dass eine bessere Nutzung der Heizenergie erreicht wird. Es ist weiterhin dadurch möglich, den Reflektor näher am Vorformling anzuordnen. Der Reflektor kann z.B. die Form einer Zylinderinnenfläche aufweisen. Alternative gekrümmte, den Vorformling in einem Teilumfangsbereich umschließende Flächen sind ebenfalls möglich, sowie auch polygonzugartige Reflektoren mit mehreren aneinandergrenzenden ebenen Reflektorbereichen. Bevorzugt beträgt der Umschließungswinkel des Reflektors dabei mehr als 90°, bevorzugt mehr als 120°, besonders bevorzugt mehr als 150°. Die dem Vorformling zugewandte Fläche des Reflektors weist bevorzugt eine Bogen- oder Kreisform um den Vorformling herum auf. Hierdurch wird eine verbesserte Reflektion der Wärmestrahlung auf den Vorformling erreicht. Weiterhin ist vorteilhaft, dass ein Abstand einer Mittelachse des Reflektors zur äußeren Oberfläche des Vorformlings beim Durchfahren der Heizeinrichtung konstant ist. Dieses ermöglicht ebenfalls einen optimalen Rückwurf der Erwärmungsenergie vom Reflektor auf den Vorformling.

Es hat sich gezeigt, dass eine Verminderung des Abstands der Reflektoren auch zu einer Verbesserung der Qualität der Beheizung der Vorformlinge fiihrt, da der Ort des Wärmeeintrags besser beherrschbar ist. Dies gilt insbesondere, wenn eine Temperierung des Vorformling mit einem Temperaturprofil erfolgen soll, der Vorformling also in unterschiedlichen Bereichen eine unterschiedliche Temperatur erhalten soll.

Eine weitere Ausgestaltung der Erfindung sieht vor, dass der Reflektor sich über die wesentliche Länge des Vorformlings erstreckt. Der Mündungsbereich des Vorformlings und/oder der geschlossene Kuppenbereich kann z.B. ausgespart sein. Die Höhe des Reflektors sollte bevorzugt auf den Vorformling angepasst sein.

Eine weitere Ausgestaltung der Erfindung sieht vor, dass die Bewegung des Reflektors mit der Handhabungseinrichtung synchronisiert ist/wird. Bei der Handhabungsvorrichtung kann es sich z.B. um einen Transportdorn, eine Zange und/oder einen Spreizdorn handeln.

Eine weitere Ausgestaltung der Erfindung sieht vor, dass der Reflektor Öffnungen für den Durchtritt eines Kühlmediums aufweist. Ein solches Kühlmedium kann z.B. Kühlluft sein, die in den Heizbereich eingeblasen wird, z.B. für die Kühlung des Reflektors. Die Kühlluft kann auch auf den Vorformling gerichtet sein, z.B. um die Regelung der Temperierung der Vorformlinge oder die Regelung der Ausbildung eines Temperaturprofils in den Vorformlingen über die Steuerung der Kühlluftzufuhr und/oder der Heizleistung der Heizeinrichtungen zu erreichen.

Eine weitere Ausgestaltung der Erfindung sieht vor, dass der Reflektor Abschnitte mit unterschiedlichen Reflektionseigenschaften aufweist. Hierdurch lässt sich ein gewünschtes Erwärmungsprofil im Bezug auf den Vorformling erreichen. Insbesondere ist vorgesehen, dass diese Abschnitte in Längsrichtung des Vorformlings angeordnet sind, also entlang der Längsachse des Vorformlings. Bei stehendem oder hängendem Vorformlingstransport entspricht dies der vertikalen Richtung. Es kann z.B. der dem Kuppenbereich des Vorformlings zugeordnete Reflektorbereich schlecht reflektierend ausgebildet sein, um diesen Bereich weniger stark zu temperieren.

Eine weitere Ausgestaltung der Erfindung sieht vor, dass die Handhabungseinrichtung im Heizbereich drehbar ausgebildet ist. Hierdurch kann der von der Handhabungseinrichtung gehaltene Vorformling im Heizbereich für die Erreichung einer optimalen Erwärmung gedreht werden. Um diese vorteilhafte Vorformlingsdrehung im Heizbereich zu erhalten ist es aber auch möglich, die Handhabungseinrichtung so auszubilden, dass der Vorformling relativ zur Handhabungseinrichtung gedreht wird.

Im Bezug auf das Verfahren sieht eine weitere Ausgestaltung der Erfindung vor, dass der Reflektor gegenüber der Heizeinrichtung angeordnet wird, und/oder dass sich der Reflektor synchron mit dem Vorformling bewegt, und/oder dass ein Abstand einer Mittelachse des Reflektors zur äußeren Oberfläche des Vorformlings beim Durchfahren des Heizbereiches konstant bleibt, und/oder dass der Reflektor den Heizbereich in vertikaler Richtung begrenzt.

In den Zeichnungen sind Ausfiihrungsbeispiele der Erfindung schematisch dargestellt. Es zeigen:
- Fig. 1: einen schematischen Querschnitt durch ein erfindungsgemäßes Heizmodul mit zugeordnetem, zu beheizenden Vorformling und Reflektor,
- Fig. 2: ein schematisch dargestelltes Heizelement mit Reflektor und Vorformling in Seitenansicht,
- Fig. 3: eine Draufsicht zu Fig. 2,
- Fig. 4: eine weitere Seitenansicht zu Fig. 2
- Fig. 5: eine geschnittene Darstellung zu Fig. 4 mit einer ersten Ausführungsform eines Reflektors,
- Fig. 6: eine geschnittene Darstellung zu Fig. 4 mit einer zweiten Ausführungsform eines Reflektors,
- Fig. 7: eine räumliche Darstellung einer dritten Ausführungsform eines Reflektors,
- Fig. 8: eine Draufsicht zu Fig. 7,
- Fig. 9: eine räumliche Darstellung der ersten Ausführungsform eines Reflektors gemäß Fig. 5,
- Fig. 10: eine Draufsicht zu Fig. 9,
- Fig. 11: eine räumliche Darstellung der zweiten Ausführungsform eines Reflektors gemäß Fig. 6, und
- Fig. 12: eine Seitenansicht zu Fig. 11.

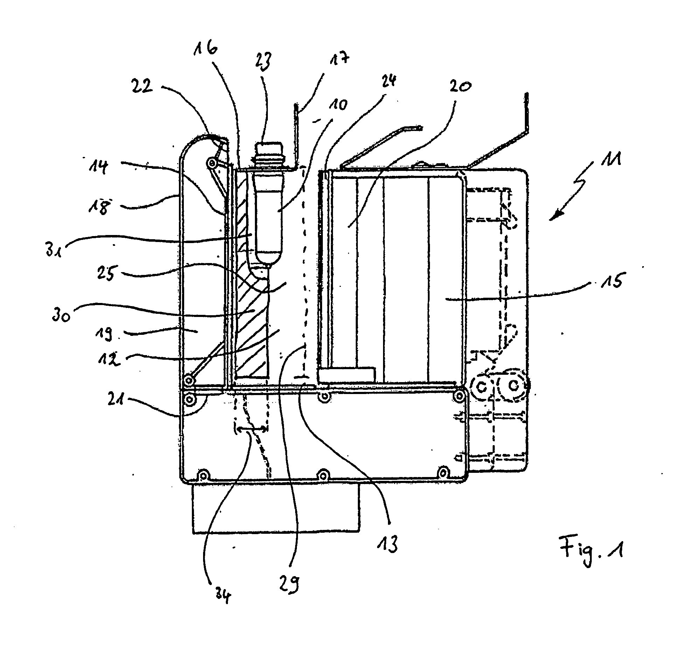

Fig. 1 zeigt eine perspektivische Darstellung eines Heizmoduls 11, das zur Anordnung im Bereich einer Heizstrecke (nicht dargestellt) vorgesehen ist. Das Heizmodul 11 umgibt einen Heizkanal 12, durch den die Vorformlinge 10 hindurchbewegt werden. Der Heizkanal 12 ist im Wesentlichen entsprechend einem U-Profil ausgebildet und weist einen geschlossenen Boden 13 auf. Seitlich wird der Heizkanal 12 von einer Seitenwand 14, die auch als Reflektor ausgeführt sein kann, sowie von einem Heizkasten 15 begrenzt. Im Bereich des Heizkastens 15 sind Heizstrahler 20 positioniert.

Der Vorformling 10 ist in einem Halteelement 16 angeordnet. Das Halteelement 16 weist einen Träger 17 auf. Über den Träger 17 und das Halteelement 16 wird der Vorformling 10 in einer definierten Positionierung durch den Heizkanal 12 hindurch transportiert.

Aus Fig. 1 ist erkennbar, dass die Seitenwand 14 mit einem Kühlkörper 18 verbunden ist, der einen Strömungskanal 19 aufweist. In den Strömungskanal 19 strömt durch eine Einströmöffnung 21 hindurch Kühlluft ein und tritt durch eine Ausströmöffnung 22 wieder aus dem Strömungskanal 19 aus. Die aus dem Kühlkörper 18 austretende Kühlluft wird in Richtung auf den Mündungsabschnitt 23 des Vorformlings 10 geleitet und umströmt somit den Mündungsabschnitt 23 des Vorformlings 10 und führt zu dessen Kühlung.

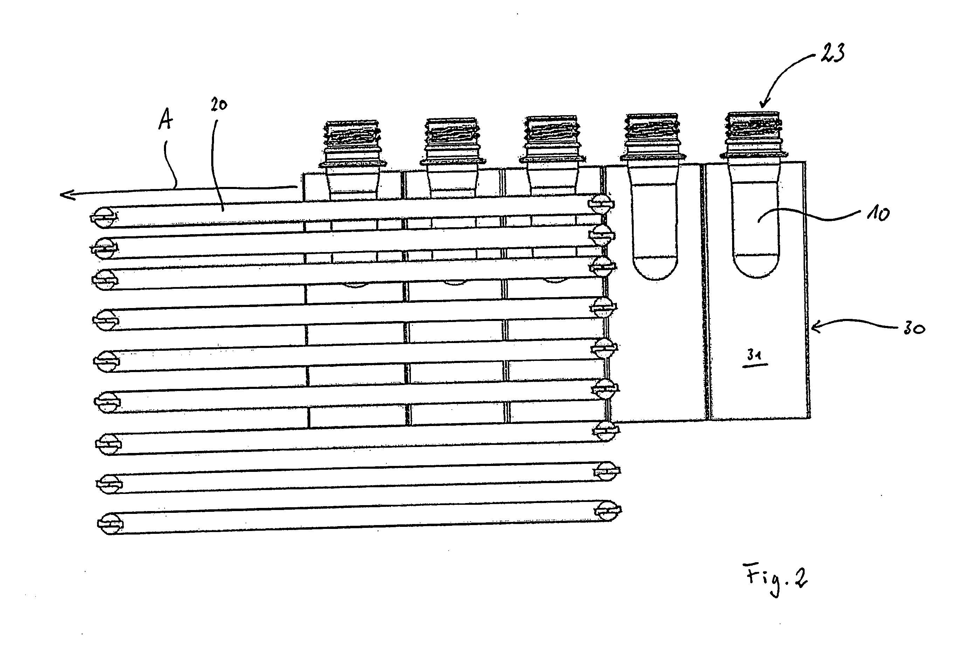

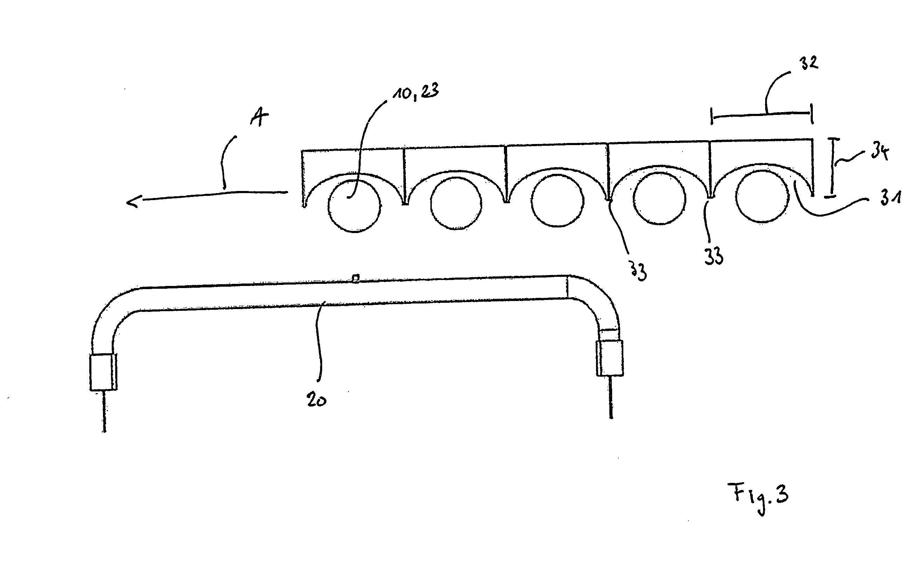

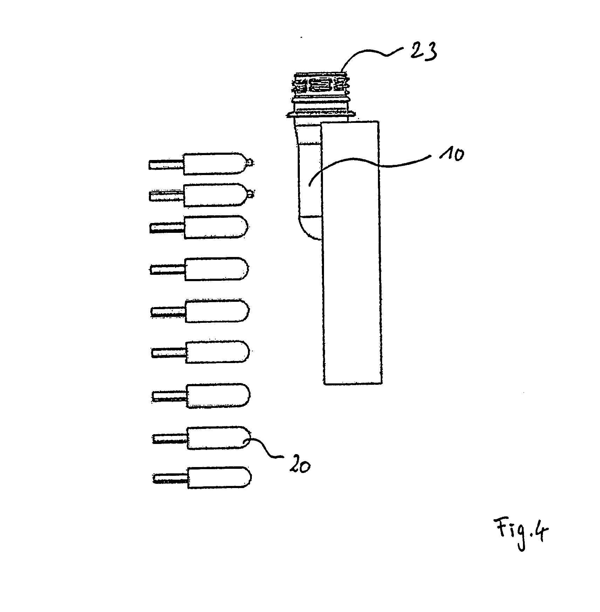

Im Bereich des Heizkastens 15 sind eine Mehrzahl von Heizstrahlern 20 in lotrechter Richtung übereinander angeordnet (siehe auch Fig. 2 bis Fig. 6). Zur Realisierung einer frequenzselektiven Beheizung ist zwischen den Heizstrahlern 20 und dem Heizkanal 12 eine Filterscheibe 24 angeordnet, die vorzugsweise aus einem geeigneten Quarzglas besteht. Gemäß einer vorteilhaften Ausführungsform werden sowohl die Heizstrahler 20 als auch die Filterscheibe 24 von Kühlluft gekühlt.

Im Bereich einer der Filterscheibe 24 abgewandten Richtung ist hinter den Heizstrahlern 20 ein Strahlerreflektor (nicht dargestellt) angeordnet, der vorzugsweise eine profilierte Reflektoroberfläche aufweist. Die Reflektoroberfläche ist vorzugsweise derart strukturiert, dass eine Rückstrahlung in die Heizstrahler 20 hinein vermieden wird und die Ausbildung einer geeigneten Wärmeverteilung im Bereich des Heizkanals 12 unterstützt wird. Das Heizmodul 11 ist dafür vorgesehen, die Vorformlinge 10 in einer räumlichen Orientierung zu beheizen, bei der die Vorformlinge 10 mit ihrem Mündungsabschnitt 23 in lotrechter Richtung nach oben angeordnet sind. Der Träger 17 für die Vorformlinge 10 ist deshalb in einem in lotrechter Richtung oberen Bereich des Heizkanals 12 bzw. oberhalb des Heizkanals 12 angeordnet. Der Träger 17 ist hierbei mit einer nicht dargestellten Transporteinrichtung verbunden

Zur Bereitstellung des tunnelartigen Heizkanals 12 ist der Heizkanal 12 in lotrechter Richtung nach unten von einem Boden 13 begrenzt, der z.B. als Reflektor ausgebildet sein kann. Der Heizkanal 12 weist eine Querschnittfläche 25 auf, die einer konstruktiv vorgesehenen maximalen Ausdehnung des Heizkanals 12 entspricht.

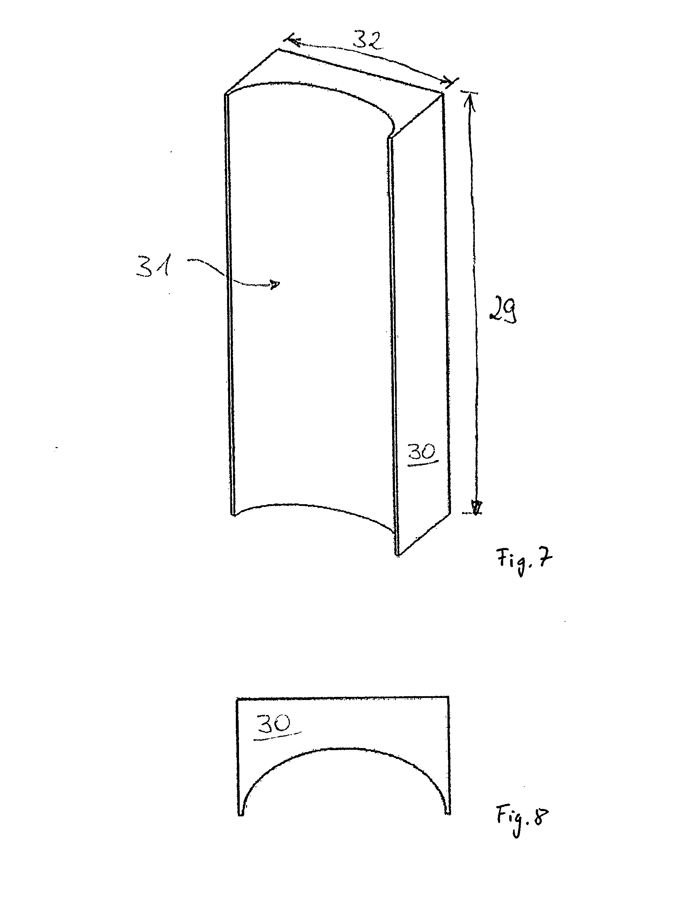

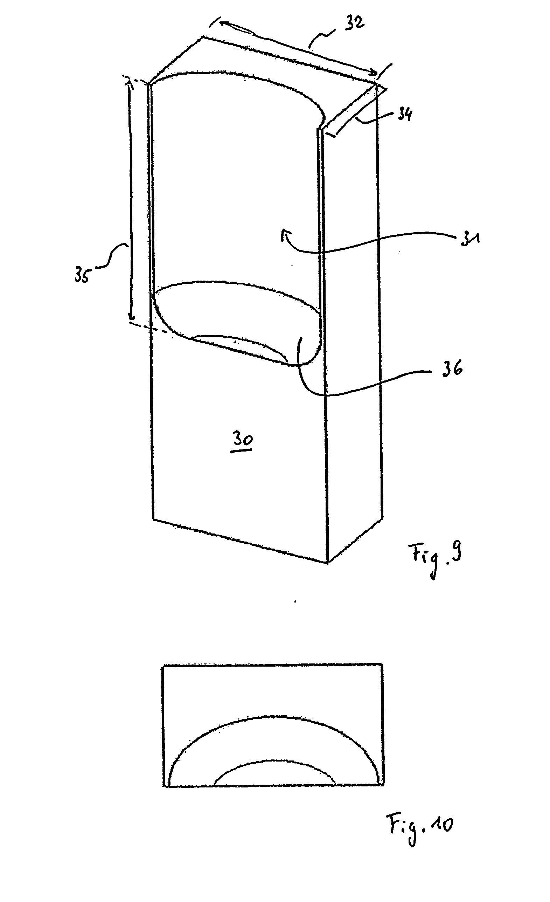

In Fig. 1 gezeigt ist eine Verkleinerung der Querschnittfläche 25 das Heizkanals des Heizmoduls 11. Am Träger 17 ist dazu ein Reflektor 30 angeordnet, dessen Höhe 29 sich in vorteilhafter Weise im Wesentlichen über die Höhe des Heizkanals 12 erstreckt. Der Reflektor weist entweder, wie in Fig. 7, 8 dargestellt ist, eine kreissegmentförmig ausgeführte Aussparung über die gesamte Höhe 29 des Reflektors 30 auf, oder die Höhe 35 der Aussparung 31 ist an die Höhe des Vorformlings 10 angepasst, wie dieses in Fig. 9, 10 dargestellt ist. Die Breite 32 des Reflektors 30 ist dabei so gewählt, dass sich die Enden 33 der Aussparungen 31 im Wesentlichen mittig zwischen zwei Vorformlingen 10 befinden. Die Tiefe 34 des Reflektors 30 erstreckt sich in die Bewegungsbahn des Vorformlings 10, hier in Pfeilrichtung A, hinein. Die Form der Aussparung 31 ist dabei so gewählt, dass eine günstige Reflektion der Wärmestrahlung der Heizstrahler 20 zurück zum Vorformling 10 erreicht wird.

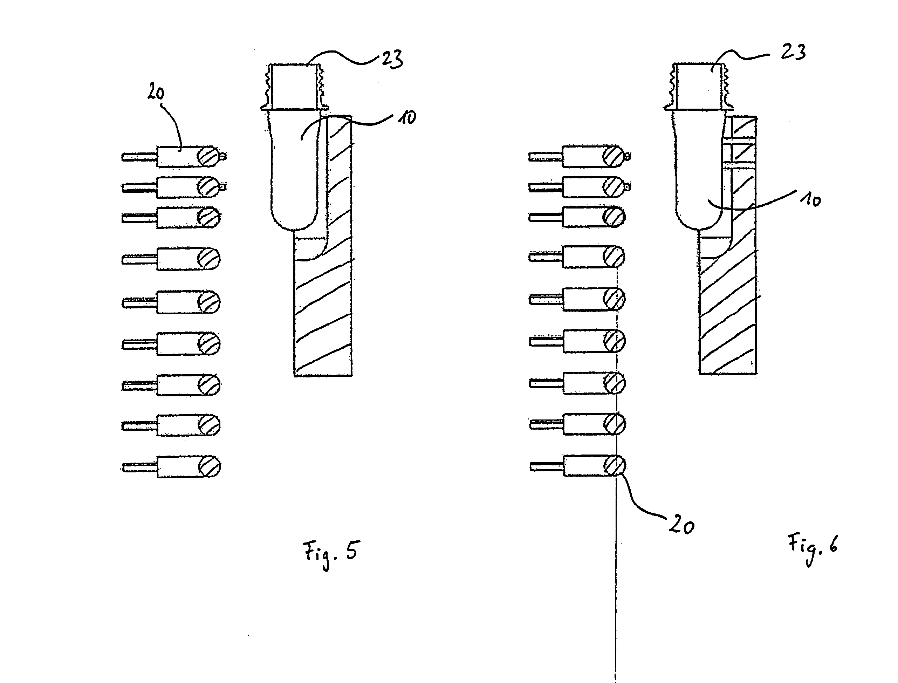

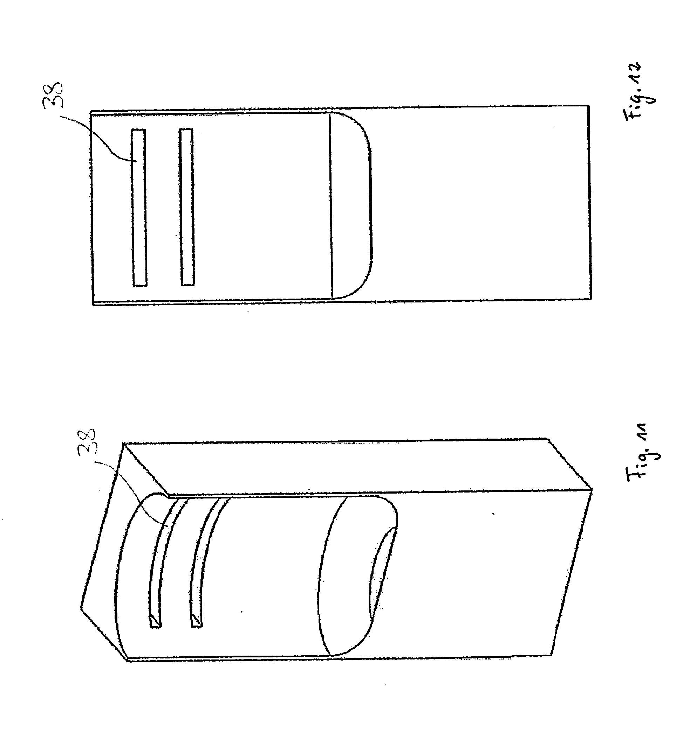

Fig. 5, 9, 10 zeigen eine Ausführungsform eines Reflektors 30 mit einer Aussparung 31, die sich nur über eine Höhe 35, die im Wesentlichen mit der Höhe des Vorformlings 20 korrespondiert, erstreckt. In dieser Ausführungsform weist die Aussparung 31 einen Boden 37 mit einem Übergangsbereich 36 auf. Zusätzlich können, wie in Fig. 6, 11, 12 dargestellt, Kühlöffnungen 38 im Reflektor vorgesehen sein, durch die entweder Kühlluft zugeführt oder Warmluft abgeführt wird.

Beim Einsatz von Aussparungen 31 in den Reflektoren 30 werden im Bereich des Heizkanals 12 außerhalb der Aussparungen 31 zweckmäßigerweise diejenigen Heizstrahler 20 abgeschaltet, die sich auf einem Höhenniveau außerhalb der Aussparungen 31 befinden.

Im Betrieb werden die Vorformlinge 10 zusammen mit den Reflektoren 30 im Heizkanal 12 an den Heizstrahlern in Transportrichtung A vorbei bewegt (siehe Fig. 2 bis 4).

### Bezugszeichenliste

- 10.: Vorformling
- 11.: Heizmodul
- 12.: Heizkanal
- 13.: Boden
- 14.: Seitenwand
- 15.: Heizkasten
- 16.: Halteelement
- 17.: Träger
- 18.: Kühlkörper
- 19.: Strömungskanal
- 20.: Heizstrahler
- 21.: Einströmöffung
- 22.: Ausströmöffnung
- 23.: Mündungsabschnitt
- 24.: Filterscheibe
- 25.: Querschnittsfläche
- 29.: Höhe
- 30.: Reflektor
- 31.: Aussparung
- 32.: Breite
- 33.: Ende
- 34.: Tiefe
- 35.: Höhe
- 36.: Übergangsbereich
- 37.: Boden
- 38.: Kühlöffnung

## Patentansprüche

1. Vorrichtung zur Blasformung von Behältern aus einem thermoplastischen Material, die mindestens eine entlang eines Transportweges eines Vorformlings angeordnete Heizstrecke mit wenigstens einer Heizeinrichtung, eine Handhabungseinrichtung für den Vorformling zum Transport durch die Heizstrecke und eine mit einer Blasform versehene Blasstation aufweist, wobei der Transportweg mindestens bereichsweise tunnelartig begrenzt ist, wobei auf wenigstens einer der Heizeinrichtung gegenüberliegenden Seite ein Reflektor vorgesehen ist, der im Bereich der Heizeinrichtung mit diesem zusammen einen Heizbereich bildet, wobei der Reflektor mit der Handhabungseinrichtung durch die Heizstrecke hindurch bewegbar ausgeführt ist und sich wenigstens teilweise in die Bewegungsbahn des Vorformlings hinein erstreckt, **dadurch gekennzeichnet, dass** der Reflektor Öffnungen für den Durchtritt eines Kühlmediums aufweist und/oder der Reflektor Abschnitte mit unterschiedlichen Reflexionseigenschaften aufweist.

2. Vorrichtung nach Anspruch 1, **dadurch gekennzeichnet, dass** der Reflektor sich wenigstens über die wesentliche Höhe des Vorformlings erstreckt.

3. Vorrichtung nach einem der Ansprüche 1 oder 2, **dadurch gekennzeichnet, dass** die dem Vorformling zugewandte Fläche des Reflektors auf den Vorformling hin gekrümmt und diesen in einem Teilumfangsbereich umschließend ausgebildet ist, und insbesondere eine den Vorformling umschließende Bogen- oder Kreisform aufweist.

4. Vorrichtung nach einem der Ansprüche 1 bis 3, **dadurch gekennzeichnet, dass** die Bewegung des Reflektors mit der Handhabungseinrichtung synchronisiert ist.

5. Vorrichtung nach einem der Ansprüche 1 bis 4, **dadurch gekennzeichnet, dass** der Reflektor mit der Handhabungseinrichtung mechanisch bewegungsgekoppelt verbunden ist, insbesondere an der Handhabungseinrichtung befestigt ist.

6. Vorrichtung nach einem der Ansprüche 1 bis 5, **dadurch gekennzeichnet, dass** ein Abstand einer Mittelachse des Reflektors zur äußeren Oberfläche des Vorformlings beim Durchfahren des Heizbereiches konstant ist.

7. Vorrichtung nach einem der Ansprüche 1 bis 6, **dadurch gekennzeichnet, dass** der Vorformling im Heizbereich drehbar ausgeführt ist.

8. Verfahren zur Blasformung von Behältern, bei dem ein Vorformling aus einem thermoplastischen Material nach einer thermischen Konditionierung entlang eines Transportweges im Bereich einer Heizstrecke mit einem Heizbereich innerhalb einer Blasform durch Blasdruckeinwirkung in den Behälter umgeformt wird, und bei dem der Transportweg mindestens bereichsweise tunnelartig begrenzt wird, wobei im Heizbereich der Heizstrecke ein Reflektor vorgesehen wird, der sich mit dem Vorformling durch den Heizbereich bewegt, sich wenigstens abschnittweise dabei in die Bewegungsbahn des Vorformlings hinein erstreckt und den Heizbereich in horizontaler Richtung begrenzt, **dadurch gekennzeichnet, dass** der Reflektor mit Öffnungen für den Durchtritt eines Kühlmediums ausgebildet wird und/oder der Reflektor mit Abschnitte mit unterschiedlichen Reflexionseigenschaften ausgebildet wird.

9. Verfahren nach Anspruch 8, **dadurch gekennzeichnet, dass** der Reflektor gegenüber einer im Heizbereich angeordneten Heizeinrichtung angeordnet wird, und/oder dass sich der Reflektor synchron mit dem Vorformling bewegt, und/oder dass ein Abstand einer Mittelachse des Reflektors zur äußeren Oberfläche des Vorformlings beim Durchfahren des Heizbereiches konstant bleibt.

10. Verfahren nach Anspruch 8 oder 9, **dadurch gekennzeichnet, dass** der Reflektor den Heizbereich zumindest teilweise auch in vertikaler Richtung begrenzt.

## Claims

1. Apparatus for blow-moulding containers from a thermoplastic material, comprising at least one heating section that is arranged along a transport path of a pre-form and has at least one heating facility, a handling facility for the pre-form for transport through the heating section, and a blow-moulding station provided with a blow mould, whereby the transport path is limited, at least in regions thereof, in the way of a tunnel, whereby a reflector is provided on at least one side opposite from the heating facility and jointly forms a heating region in the region of the heating facility, whereby the reflector is provided such that it can be moved jointly with the handling facility through the heating section and extends, at least in part, into the motion path of the pre-form, **characterised in that** the reflector comprises openings for passage of a cooling medium and/or the reflector comprises sections possessing different reflection properties.

2. Apparatus according to claim 1, **characterised in that** the reflector extends at least over the essential height of the pre-form.

3. Apparatus according to any one of the claims 1 or 2, **characterised in that** the surface of the reflector facing the pre-form is curved towards the pre-form and is provided to encompass same in a partial circumferential region, and, in particular, comprises an arc shape or circular shape encompassing the pre-form.

4. Apparatus according to any one of the claims 1 to 3, **characterised in that** the motion of the reflector is synchronised with the handling facility.

5. Apparatus according to any one of the claims 1 to 4, **characterised in that** the reflector is mechanically coupled to the handling facility in a motion-coupled manner, in particular is secured to the handling facility.

6. Apparatus according to any one of the claims 1 to 5, **characterised in that** a distance of a central axis of the reflector to the outer surface of the pre-form during passage of the heating region is constant.

7. Apparatus according to any one of the claims 1 to 6, **characterised in that** the pre-form is provided such as to be rotatable in the heating region.

8. Method for blow-moulding containers, in which a pre-form made of a thermoplastic material, following a thermal conditioning, is formed along a transport path in the region of a heating section with a heating region within a blow mould by means of the action of blow pressure to form the container, and in which the transport path is limited, at least in regions thereof, in the way of a tunnel, whereby a reflector is provided in the heating region of the heating section and moves jointly with the pre-form through the heating region and extends, at least in sections thereof, into the motion path of the pre-form and limits the heating region in horizontal direction, **characterised in that** the reflector is provided with openings for passage of a cooling medium and/or the reflector is provided with sections possessing different reflection properties.

9. Method according to claim 8, **characterised in that** the reflector is arranged opposite from a heating facility that is arranged in the heating region and/or **in that** the reflector moves synchronous to the pre-form and/or **in that** a distance of a central axis of the reflector to the outer surface of the pre-form remains constant during passage of the heating region.

10. Method according to claim 8 or 9, **characterised in that** the reflector limits the heating region, at least in part, in vertical direction also.

## Revendications

1. Dispositif de moulage par soufflage de récipients en un matériau thermoplastique présentant au moins une zone de chauffage agencée le long d'un parcours d'une préforme et équipée d'au moins un dispositif de chauffage, d'un dispositif de maniement de la préforme pour son transport à travers la zone de chauffage et d'une station de soufflage munie d'un moule de soufflage, le parcours étant, sur certaines sections au moins, délimité par une construction en tunnel, un réflecteur étant prévu sur au moins un côté opposé au dispositif de chauffage, ce réflecteur formant avec le dispositif de chauffage une section de chauffage et étant réalisé de façon à pouvoir se déplacer à travers la zone de chauffage avec le dispositif de maniement et s'étendant au moins partiellement dans la trajectoire de la préforme, **caractérisée en ce que** le réflecteur présente des ouvertures pour le passage d'un agent réfrigérant et/ou que le réflecteur présente des sections ayant différentes caractéristiques de réflexion.

2. Dispositif selon la revendication 1, **caractérisée en ce que** le réflecteur s'étend au moins sur l'essentiel de la hauteur de la préforme.

3. Dispositif selon l'une des revendications 1 à 2, **caractérisé en ce que** la face du réflecteur tournée vers la préforme est conformée de façon à être incurvée vers la préforme et à en entourer une partie de la périphérie, et notamment **en ce qu'**elle présente une forme arquée ou circulaire entourant la préforme.

4. Dispositif selon l'une des revendications 1 à 3, **caractérisé en ce que** le mouvement du réflecteur est synchronisé avec celui du dispositif de maniement.

5. Dispositif selon l'une des revendications 1 à 4, **caractérisé en ce que** le réflecteur est couplé mécaniquement au dispositif de maniement de façon à en suivre le mouvement, et notamment **en ce qu'**il est fixé au dispositif de maniement.

6. Dispositif selon l'une des revendications 1 à 5, **caractérisé en ce que** un écartement entre l'axe médian du réflecteur et la surface extérieure de la préforme est constant lors du parcours à travers la section de chauffage.

7. Dispositif selon l'une des revendications 1 à 6, **caractérisé en ce que** la préforme peut tourner dans la section de chauffage.

8. Procédé de moulage par soufflage de récipients dans le cadre duquel une préforme en un matériau thermoplastique, après un conditionnement thermique le long d'un parcours dans une zone de chauffage dotée d'une section de chauffage, est transformée en récipient sous l'action d'une pression de soufflage à l'intérieur d'un moule de soufflage, et dans le cadre duquel le parcours est, sur certaines sections au moins, délimité par une construction en tunnel, un réflecteur étant prévu dans la section de chauffage de la zone de chauffage, ce réflecteur se déplaçant dans la section de chauffage avec la préforme et s'étendant, sur certaines parties au moins, dans la trajectoire de la préforme et délimitant la section de chauffage en sens horizontal, **caractérisé en ce que** le réflecteur est façonné avec des ouvertures pour le passage d'un agent réfrigérant et/ou que le réflecteur présente des sections ayant différentes caractéristiques de réflexion.

9. Procédé selon la revendication 8, **caractérisé en ce que** le réflecteur est disposé face à un dispositif de chauffage agencé dans la section de chauffage et/ou que le déplacement du réflecteur est synchrone avec celui de la préforme, et/ou **en ce qu'**un écartement entre l'axe médian du réflecteur et la surface extérieure de la préforme reste constant lors du parcours à travers la section de chauffage.

10. Procédé selon la revendication 8 ou 9, **caractérisé en ce que** le réflecteur délimite la section de chauffage en partie au moins dans le sens vertical.
